# EUROPÄISCHE PATENTANMELDUNG

(11) **EP 0 922 611 A1**
(43) Veröffentlichungstag der Anmeldung: **16.06.1999**
(21) Anmeldenummer: 98119110.9
(22) Anmeldetag: 09.10.1998
(51) Int. Cl.: B60P 3/36, B60N 3/16

(54) **Kocher-Spüle-Kombination mit einem aufklappbaren Deckel**

(30) Priorität: 10.12.1997 DE 19754835
(71) Anmelder: Volkswagen Aktiengesellschaft, 38436 Wolfsburg (DE)
(72) Erfinder: Reddigau, Uwe, 38110 Braunschweig (DE)

(57) **Zusammenfassung**

Die Erfindung betrifft eine Kocher-Spüle-Kombination (1) mit einem aufklappbaren Deckel (2; 12). Erfindungsgemäß ist der Deckel (2; 12) als Steckdeckel ausgebildet und in einer etwa senkrecht gestellten Lage (8; 16) in einer Führung an der Rückwand der Kocher-Spüle-Kombination (1) wenigstens teilweise absenkbar. Damit wird eine Sicherung gegen ein unerwartetes Zuklappen des Steckdeckels (2; 12) erreicht. Zudem ist damit die sichtbare Deckelfläche bei geöffnetem Steckdeckel reduziert, was zu einer Verbesserung der Optik führt und bei einer Aufstellung der Kocher-Spüle-Kombination (1) vor einem Fenster (7), z. B. in einem Campingbus (5), den Lichteinfall auf den Arbeitsbereich der Spüle (3) und die Be- und Entlüftung des Kochers (4) günstig verbessert.

## Beschreibung

Die Erfindung betrifft eine Kocher-Spüle-Kombination mit einem aufklappbaren Deckel nach dem Oberbegriff des Anspruchs 1.

Bei Kocher-Spüle-Kombinationen sind ein Kocher und eine Spüle nebeneinander ggf. als einstückige Einheit angeordnet. Solche Kombinationen werden insbesondere für platzsparende Lösungen in Kompaktküchen, Wohnmobilen, Campingbussen und Yachten verwendet. Dabei sind solche Kombinationen meist in Wohnbereichen installiert und sind bei Nichtbenutzung zum Erhalt von Abstellflächen und für eine gefällige Optik regelmäßig durch einen aufklappbaren Deckel abdeckbar.

Bei allgemein bekannten Ausführungsformen ist ein solcher Deckel an Scharnieren an der Rückwand der Kombination befestigt und in eine etwa senkrechte Lage aufklappbar. Dabei steht der Deckel mit seiner gesamten Deckelfläche an der Rückseite der Kombination nach oben ab. Bei einer üblichen Anordnung einer solchen Kombination an einer Seitenwand, z. B eines Campingbusses oder eines Wohnmobils, vor einem Seitenfenster wird dieses weitgehend abgedeckt, so daß der Lichteinfall gerade auf den Arbeitsbereich der Spüle und des Kochers bei dessen Benutzung ungünstig verringert wird. Zudem kann ein hochgeklappter Deckel durch Fahrzeugbewegungen ungewollt zuklappen und stellt somit z. B. in Verbindung mit kochenden Gerichten auf dem Kocher eine Gefahrenquelle dar oder es sind zusätzliche Sicherungsmaßnahmen erforderlich. Darüber hinaus kann durch hochgeklappte Deckel die ohnehin beim Kochvorgang erforderliche Be- und Entlüftung negativ beeinflußt werden.

Aufgabe der Erfindung ist es, eine Kocher-Spüle-Kombination mit Deckel so weiterzubilden, daß deren Funktion bei einfacher Handhabung verbessert wird.

Diese Aufgabe wird mit den Merkmalen des Anspruchs 1 gelöst.

Gemäß Anspruch 1 ist der Deckel als Steckdeckel ausgebildet und in einer etwa senkrecht gestellten Lage in einer Führung an der Rückwand der Kocher-Spüle-Kombination wenigstens teilweise absenkbar.

Damit wird eine Sicherung gegen ein unerwartetes Zuklappen des Steckdeckels erreicht. Zudem ist damit die sichtbare Deckelfläche bei geöffnetem Steckdeckel reduziert, was zu einer Verbesserung der Optik führt und bei einer Aufstellung der Kombination vor einem Fenster, beispielsweise in einem Campingbus, den Lichteinfall auf den Arbeitsbereich der Spüle und des Kochers günstig verbessert. Die Be- und Entlüftung während normaler Kochvorgänge wird ebenfalls günstiger.

Der Steckdeckel kann dabei in seiner Offenstellung insgesamt abgesenkt werden, so daß es ganz aus dem Sichtbereich verschwindet. Je nach den Gegebenheiten kann es jedoch auch zweckmäßig sein, den Steckdeckel nur teilweise abzusenken, so daß in der Offenstellung ein Teilbereich des Steckdeckels als Spritzschutz hinter der Kocher-Spüle-Kombination verbleibt. In einer weiterführenden Ausführungsform wird vorgeschlagen, einen solchen Spritzschutz in der Höhe je nach Bedarf dadurch einstellbar zu machen, daß der Steckdeckel in unterschiedliche, überdrückbare Raststellungen absenkbar ist.

Vorteilhaft wird der Steckdeckel aus transparentem Material, bevorzugt aus hitzebeständigem Glas hergestellt. Bei der Aufstellung der Kombination vor einem Fenster kann dann auch in einer teilweise abgesenkten Position des Steckdeckels noch zusätzlich Licht auf den Arbeitsbereich an der Kombination durch den Steckdeckel durchdringen. Zweckmäßig wird hierbei ein matt transparentes Material gewählt, so daß bei abgedeckter Kombination die Kocherteile und ggf. Geschirr im Spülbecken nicht direkt sichtbar sind. Hitzebeständiges Glas ist zudem unempfindlich gegenüber ggf. noch heißen Kocherteilen beim Schließen des Deckels und ist zudem einfach hygienisch zu reinigen.

In einer besonders bevorzugten Ausführungsform ist der Steckdeckel in ein Kocherdeckelteil und ein Spülendeckelteil zweigeteilt. Mit dem Kocherdeckelteil ist dann der Kocher und mit dem davon unabhängig aufklappbaren und absenkbaren Spülendeckelteil die Spüle abdeckbar. Da in der Regel der Kocher und die Spüle nicht gleichzeitig benutzt werden, kann dann bei einer Kocherbenutzung mit offenem Kocherdeckelteil der geschlossene Spülendeckelteil als Anrichtplatte oder Abstellplatte für Kochgeschirr verwendet werden. Dazu wird der Spülendeckelteil vorzugsweise mit einer hitzebeständigen Oberfläche ausgebildet.

Andererseits kann bei der Benutzung der Spüle mit einem offenen Spülendeckelteil ein geschlossener Kocherdeckelteil als Abstellplatte für gespültes Geschirr verwendet werden. Dazu ist es erforderlich, wenigstens die Oberfläche des Kocherdeckelteils aus wasserfestem Material herzustellen. Eine Verbesserung wird hierbei noch erreicht, wenn der Kocherdeckelteil in der Geschlossenstellung eine Neigung und einen Wasserablauf für vom Geschirr abtropfendes Wasser in das Spülbecken der Spüle aufweist. Dabei können für eine geeignete Wasserableitung Wasserlaufrinnen und erhöhte Randleisten am Kocherdeckelteil verwendet sein.

Diese Neigung für einen Wasserablauf kann von vorneherein durch entsprechende Anordnung des Kocherdeckelteils in Verbindung mit der Führungsmechanik vorgesehen sein. Um in der Geschlossenstellung des Spülendeckelteils und des Kocherdeckelteils eine gerade, durchgehende Oberfläche zu erhalten, kann auch eine Neigung des Kocherdeckelteils für einen Wasserablauf durch eine betätigbare Stellmechanik herstellbar sein, mit der der Kocherdeckelteil in der Geschlossenstellung bei Bedarf an der der Spüle abgewandten Seite anhebbar ist.

In einer weiteren, zweckmäßigen Ausgestaltung ist dem Kocherdeckelteil ein ausziehbares Gitter als Geschirrablage und Geschirrabtropfer zugeordnet, wobei das Gitter bei geschlossenem Kocherdeckelteil auf diesen aufsetzbar ist. Ein solches Gitter kann dabei in einer weiteren Führung, insbesondere einer Schlitzführung hinter der Deckelführung oder in einem Seitenbereich der Kombination gehalten sein.

In vorteilhaften Anordnungen ist die Kocher-Spüle-Kombination in einem Unterschrank integriert, der vor einer Stellwand aufstellbar ist. Die Führung für den Steckdeckel kann dabei als Schlitzführung zwischen der Stellwand und der Unterschrankrückwand ausgebildet sein. Eine solche Ausführungsform eignet sich besonders für die Aufstellung an einer inneren Seitenwand in einem Campingbus, einem Wohnmobil oder einer Yacht.

Ein besonderes Problem bei platzsparenden Lösungen mit Kocher-Spüle-Kombinationen stellt die Aufbewahrung von gerade nicht benutzten, großen Schalen, großen Sieben und Schüsseln dar. Eine vorteilhafte Lösung dieses Problems besteht darin, daß das Spülbecken mehrschalig ausgebildet ist mit einer üblichen ersten, fest installierten Beckenschale, mit einem angeschlossenem Wasserablauf und wenigstens einer weiteren, darin formschlüssig und herausnehmbar aufgenommenen Schüssel. Wenn diese weitere Schüssel als Sieb beispielsweise zum Waschen von Salaten ausgebildet ist, kann bei Verwendung dieses Siebs im Spülenbereich zudem der Wasserablauf der fest installierten Beckenschale verwendet werden. Vorzugsweise ist im Spülbecken ein ganzes Set von mehreren, formschlüssig ineinander gesetzten, großvolumigen Schüsseln, Sieben und Schalen für unterschiedliche Verwendungszwecke angeordnet. Für einen solchen Spülbeckenaufbau wird Elementenschutz beantragt.

Anhand einer Zeichnung wird die Erfindung näher erläutert.

Es zeigen:
- Fig. 1: eine schematische Vorderansicht einer Kocher-Spüle-Kombination mit einem aufklappbaren Steckdeckel in teilweise abgesenkter Stellung, und
- Fig. 2: eine schematische Vorderansicht einer Kocher-Spüle-Kombination mit einem zweigeteilten Steckdeckel.

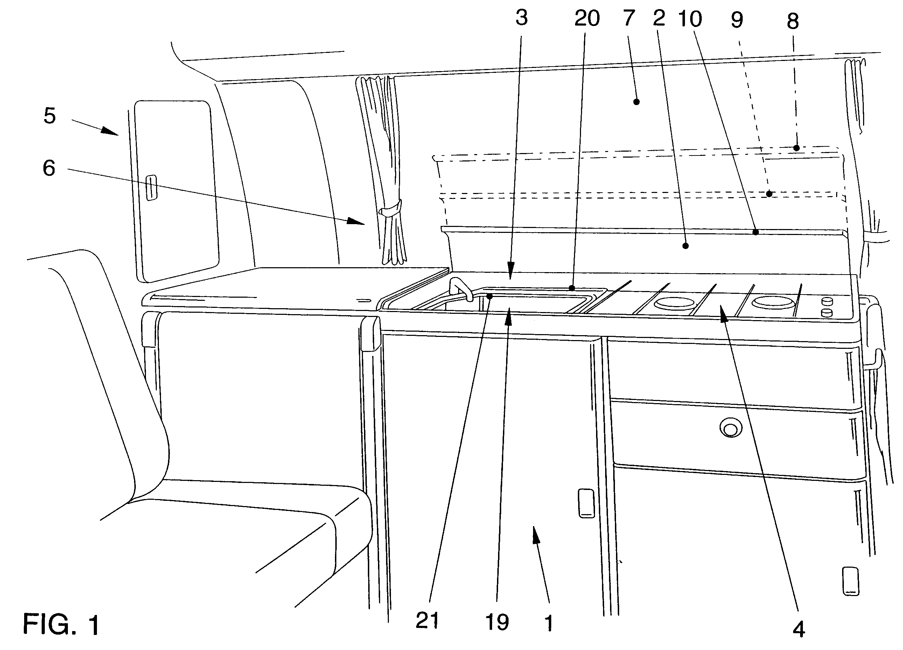

In der Fig. 1 ist eine Kocher-Spüle-Kombination 1 mit einer ersten Ausführungsform eines aufklappbaren Steckdeckels 2 dargestellt, der sich über die gesamte Breite der Kocher-Spüle-Kombination erstreckt. Die Kocher-Spüle-Kombination 1 besteht aus einer Spüle 3 und einem Kocher 4 und ist in einem Campingbus 5 an einer inneren Seitenwand 6 unmittelbar unter einem Seitenfenster 7 angeordnet.

Der Steckdeckel 2 kann in der in der Fig. 1 dargestellten, senkrecht gestellten Absenkposition 8 in einer hier nicht dargestellten Schlitzführung zwischen der inneren Seitenwand 6 und der Rückwand der Kocher-Spüle-Kombination 1 wenigstens teilweise abgesenkt werden.

Der Steckdeckel 2 ist in der Höhe je nach Bedarf in unterschiedliche, überdrückbare Raststellungen absenkbar, wie dies in der Fig. 1 mit den beiden strichliert eingezeichneten Absenkpositionen 9, 10 dargestellt ist.

Im vollständig abgesenkten Zustand verschwindet der Steckdeckel 2 ganz aus dem Sichtbereich, wodurch der Lichteinfall auf den Arbeitsbereich der Spüle 3 und des Kochers 4 verbessert wird. Im nur teilweise abgesenkten Zustand kann der Steckdeckel 2 auch als Spritzschutz hinter der Kocher-Spüle-Kombination verbleiben, z. B. in der Absenkposition 10. Für einen günstigen Lichteinfall auf den Arbeitsbereich der Spüle 3 und des Kochers 4 ist der Steckdeckel 2 hier aus hitzebeständigem Glas hergestellt.

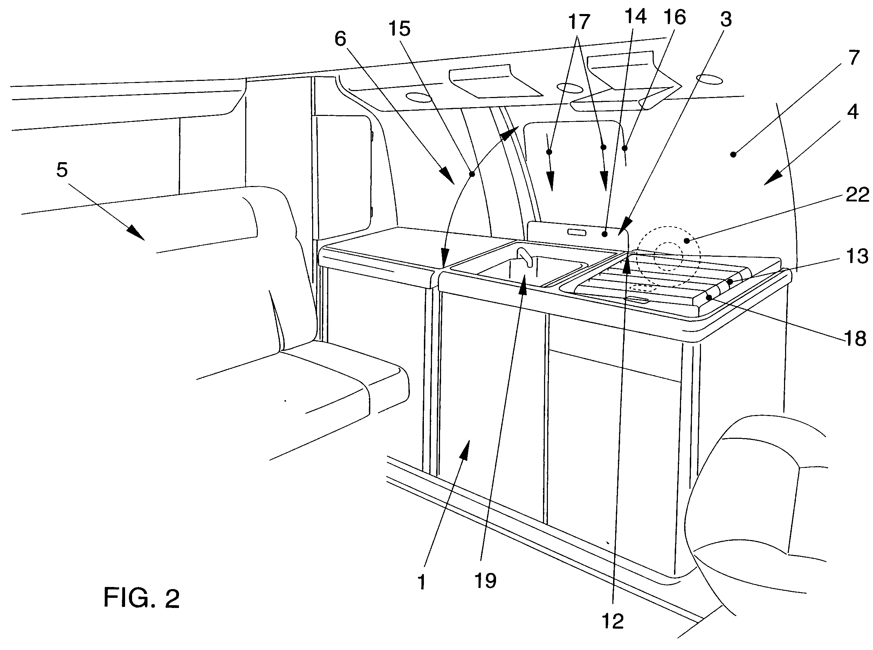

In einer in der Fig. 2 dargestellten alternativen Ausführungsform ist ein Steckdeckel 12 in ein Kocherdeckelteil 13 und ein Spülendeckelteil 14 zweigeteilt. Durch diesen zweiteiligen Aufbau ist mit dem Kocherdeckelteil 13 der Kocher 4 und mit dem davon unabhängig aufklappbaren und absenkbaren Spülendeckelteil 14 die Spüle 3 abdeckbar. Da der Kocher 4 und die Spüle 3 in der Regel nicht gleichzeitig benutzt werden, kann dann bei einer Kocherbenutzung mit offenem Kocherdeckelteil 13 der geschlossene Spülendeckelteil 14 als Anrichtplatte oder Abstellplatte für Kochgeschirr verwendet werden. Der Spülendeckelteil 14 ist dazu mit einer hitzebeständigen Oberfläche ausgebildet.

Soll andererseits lediglich die Spüle 3 benutzt werden, wird der Spülendeckelteil 14, wie dies in der Fig. 2 mit dem Pfeil 15 dargestellt ist, in dessen in etwa senkrecht gestellte Absenkposition 16 geschwenkt und anschließend, wie dies durch die beiden Pfeile 17 dargestellt ist, hinter die Spüle 3 abgesenkt. Der geschlossene Kocherdeckelteil 13 kann dann als Abstellplatte für gespültes Geschirr 22 verwendet werden. Dazu ist die Oberfläche des Kocherdeckelteils 13 aus wasserfestem Material hergestellt. Für einen günstigen Wasserablauf ist der Kocherdeckelteil 13 in der Geschlossenstellung zu der Spüle 3 hin geneigt. Für die Wasserableitung sind hier nicht dargestellte Wasserlaufrinnen und erhöhte Randleisten am Kocherdeckelteil 13 angebracht. Diese Neigung des Kocherdeckelteils 13 für einen Wasserablauf kann auch durch eine betätigbare Stellmechanik herstellbar sein, die hier jedoch nicht dargestellt ist.

In der in der Fig. 2 dargestellten Ausführungsform ist auf das geschlossene Kocherdeckelteil 13 ein Gitter 18 zur Ablage und zum Abtropfen des gespülten Geschirrs 17 aufgesetzt. Das Gitter 18 kann dabei ebenfalls ausziehbar ausgebildet sein und in einer hier nicht dargestellten Schlitzführung hinter der ebenfalls nicht dargestellten Kocherdeckelteilführung gehalten sein.

Zur platzsparenden Aufbewahrung von gerade nicht benutzten großen Schalen, Sieben und Schüsseln ist das Spülbecken 19 der Spüle 3 mehrschalig ausgebildet, wie dies in der Fig. 1 schematisch dargestellt ist. Das Spülbecken 19 umfaßt hier eine erste, fest installierte Beckenschale 20 mit einem angeschlossenen Wasserablauf, in die ein herausnehmbares Sieb 21 formschlüssig eingesetzt ist. Beispielsweise kann in dem Sieb 21 Salat gewaschen werden und dabei gleichzeitig der Wasserablauf der fest installierten Beckenschale verwendet werden. Vorzugsweise ist im Spülbecken 19 ein ganzes Set von mehreren, formschlüssig ineinander gesetzten, großvolumigen Schüsseln, Sieben und Schalen für unterschiedliche Verwendungszwecke angeordnet.

## Patentansprüche

1. Kocher-Spüle-Kombination mit einem aufklappbaren Deckel,
dadurch gekennzeichnet,
daß der Deckel als Steckdeckel (2; 12) ausgebildet ist und in einer etwa senkrecht gestellten Lage (8; 16) in einer Führung an der Rückwand der Kocher-Spüle-Kombination (1) wenigstens teilweise absenkbar ist.

2. Kocher-Spüle-Kombination nach Anspruch 1, dadurch gekennzeichnet, daß der Steckdeckel (2; 12) in unterschiedliche, überdrückbare Raststellungen (9, 10) absenkbar ist.

3. Kocher-Spüle-Kombination nach Anspruch 1 oder Anspruch 2, dadurch gekennzeichnet, daß der Steckdeckel (2; 12) aus transparentem Material, bevorzugt aus matt transparentem, hitzebeständigem Glas hergestellt ist.

4. Kocher-Spüle-Kombination nach einem der Ansprüche 1 bis 3, dadurch gekennzeichnet, daß der Steckdeckel (12) in ein Kocherdeckelteil (13) und ein Spülendeckelteil (14) zweigeteilt ist, wobei mit dem Kocherdeckelteil (13) der Kocher (4) und mit dem davon unabhängig öffenbaren und absenkbaren Spülendeckelteil (14) die Spüle (3) abdeckbar ist.

5. Kocher-Spüle-Kombination nach Anspruch 4, dadurch gekennzeichnet, daß der Spülendeckelteil (14) eine hitzebeständige Oberfläche aufweist und bei einer Kocherbenutzung als Anrichtplatte und/oder als Abstellplatte für Kochgeschirr verwendbar ist.

6. Kocher-Spüle-Kombination nach Anspruch 4 oder Anspruch 5, dadurch gekennzeichnet, daß der Kocherdeckelteil (13) eine wasserfeste Oberfläche aufweist und bei einer Spülenbenutzung als Abstellplatte für gespültes Geschirr (22) verwendbar ist.

7. Kocher-Spüle-Kombination nach Anspruch 6, dadurch gekennzeichnet, daß der Kocherdeckelteil (13) in der Geschlossenstellung eine Neigung und einen Wasserablauf in das Spülbecken (19) der Spüle (3) aufweist.

8. Kocher-Spüle-Kombination nach Anspruch 7, dadurch gekennzeichnet, daß die Neigung durch eine betätigbare Stellmechanik herstellbar ist.

9. Kocher-Spüle-Kombination nach einem der Ansprüche 6 bis 8, dadurch gekennzeichnet, daß dem Kocherdeckelteil (13) ein ausziehbares Gitter (18) als Geschirrablage und als Geschirrabtropfer zugeordnet ist.

10. Kocher-Spüle-Kombination nach einem der Ansprüche 1 bis 9, dadurch gekennzeichnet, daß die Kocher-Spüle-Kombination (1) in einem vor einer Stellwand aufstellbaren Unterschrank integriert ist und die Führung eine Schlitzführung zwischen der Stellwand und der Unterschrankrückwand ist.

11. Kocher-Spüle-Kombination nach einem der Ansprüche 1 bis 10, dadurch gekennzeichnet, daß die Kocher-Spüle-Kombination (1) in einem Fahrzeug, bevorzugt in einem Campingbus (5) an einer inneren Seitenwand (6) angeordnet ist.

12. Kocher-Spüle-Kombination insbesondere nach einem der Ansprüche 1 bis 11, dadurch gekennzeichnet, daß das Spülbecken (19) einer Spüle (3) mehrschalig ausgebildet ist mit einer ersten, fest installierten Beckenschale (20) mit einem Wasserablauf und wenigstens einer weiteren darin formschlüssig und herausnehmbar aufgenommenen Schüssel und/oder einem Sieb (21).
